(19) Europäisches Patentamt
European Patent Office
Office européen des brevets

(11) **EP 3 509 822 B1**

(12) **EUROPÄISCHE PATENTSCHRIFT**

(45) Veröffentlichungstag und Bekanntmachung des Hinweises auf die Patenterteilung:
**08.12.2021  Patentblatt 2021/49**

(21) Anmeldenummer: **17771368.2**

(22) Anmeldetag: **11.09.2017**

(51) Int Cl.:
**B29C 67/00** (2017.01)    **B33Y 70/00** (2020.01)
**B33Y 10/00** (2015.01)    **B29C 64/153** (2017.01)

(86) Internationale Anmeldenummer:
**PCT/EP2017/072783**

(87) Internationale Veröffentlichungsnummer:
**WO 2018/046739 (15.03.2018 Gazette 2018/11)**

(54) **PULVERBASIERTES ADDITIVES FERTIGUNGSVERFAHREN BEI NIEDRIGER TEMPERATUR**

POWDER BASED ADDITIVE MANUFACTURING PROCESS AT LOW TEMPERATURE

PROCÉDÉ DE FABRICATION D'ADDITIF PULVÉRULENT À BASSE TEMPÉRATURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.09.2016  EP 16188417**

(43) Veröffentlichungstag der Anmeldung:
**17.07.2019  Patentblatt 2019/29**

(73) Patentinhaber: **Covestro Deutschland AG**
**51373 Leverkusen (DE)**

(72) Erfinder:
• **ACHTEN, Dirk**
**51375 Leverkusen (DE)**
• **BÜSGEN, Thomas**
**51377 Leverkusen (DE)**
• **DIJKSTRA, Dirk**
**51519 Odenthal (DE)**
• **DEGIORGIO, Nicolas**
**47807 Krefeld (DE)**
• **ARNDT, Wolfgang**
**41542 Dormagen (DE)**
• **AKBAS, Levent**
**58455 Witten (DE)**
• **WAGNER, Roland**
**51375 Leverkusen (DE)**
• **REICHERT, Peter**
**41541 Dormagen (DE)**
• **BÜCHNER, Jörg**
**51467 Bergisch Gladbach (DE)**

(74) Vertreter: **Levpat**
**c/o Covestro AG**
**Gebäude 4825**
**51365 Leverkusen (DE)**

(56) Entgegenhaltungen:
**WO-A1-2016/108154    DE-A1-102013 113 320**

**Beschreibung**

Die vorliegende Erfindung betrifft ein Verfahren zur Herstellung eines Gegenstandes, umfassend die Schritte: Auftragen einer Schicht aus Partikeln auf eine Zielfläche; Einwirken von Energie auf einen ausgewählten Teil der Schicht, entsprechend einem Querschnitt des Gegenstandes, in einer Kammer, so dass die Partikel im ausgewählten Teil verbunden werden und Wiederholen der Schritte des Auftragens und des Einwirkens von Energie für eine Mehrzahl von Schichten, so dass die verbunden Teile der benachbarten Schichten sich verbinden, um den Gegenstand zu bilden, wobei wenigstens ein Teil der Partikel ein schmelzbares Polymer aufweist.

Offenbart ist ebenfalls ein durch das erfindungsgemäße Verfahren hergestellter Gegenstand, ein Artikel mit einem Substrat und einem mit dem Substrat verbundenen Gegenstand, wobei der Gegenstand als Klebstoff-Fuge oder Lack-Bereich ausgebildet ist und die Verwendung eines bestimmten Polyurethans in pulverbasierten additiven Fertigungsverfahren.

Als additive Fertigungsverfahren werden solche Verfahren bezeichnet, mit denen Gegenstände schichtweise aufgebaut werden. Sie unterscheiden sich daher deutlich von anderen Verfahren zur Herstellung von Gegenständen wie Fräsen, Bohren oder Zerspanen. Bei letztgenannten Verfahren wird ein Gegenstand so bearbeitet, dass er durch Wegnahme von Material seine Endgeometrie erhält.

Additive Fertigungsverfahren nutzen unterschiedliche Materialien und Prozesstechniken, um Gegenstände schichtweise aufzubauen. Beim sogenannten Fused Deposition Modeling (FDM) beispielsweise wird ein thermoplastischer Kunststoffdraht verflüssigt und mit Hilfe einer Düse schichtweise auf einer beweglichen Bauplattform abgelegt. Beim Erstarren entsteht ein fester Gegenstand. Die Steuerung der Düse und der Bauplattform erfolgt auf der Grundlage einer CAD-Zeichnung des Gegenstands. Ist die Geometrie dieses Gegenstands komplex, zum Beispiel mit geometrischen Hinterschneidungen, müssen zusätzlich Stützmaterialien mitgedruckt und nach Fertigstellung des Gegenstands wieder entfernt werden.

Daneben existieren additive Fertigungsverfahren, welche thermoplastische Pulver nutzen, um Gegenstände schichtweise aufzubauen. Hierbei werden über einen so genannten Beschichter dünne Pulverschichten aufgetragen und anschließend mittels einer Energiequelle selektiv aufgeschmolzen. Das umgebende Pulver stützt dabei die Bauteilgeometrie. Komplexe Geometrien sind dadurch wirtschaftlicher zu fertigen als beim zuvor beschrieben FDM-Verfahren. Zudem können verschiedene Gegenstände eng gepackt im so genannten Pulverbett angeordnet beziehungsweise gefertigt werden. Aufgrund dieser Vorteile gelten pulverbasierte additive Fertigungsverfahren zu den wirtschaftlichsten additiven Herstellungsverfahren am Markt. Sie werden daher überwiegend von industriellen Nutzem verwendet. Beispiele für pulverbasierte additive Fertigungsverfahren sind das sogenannte Lasersintern (SLS, Selective Laser Sintering) oder das High Speed Sintering (HSS). Sie unterscheiden sich untereinander in der Methode, um die Energie für das selektive Aufschmelzen in den Kunststoff einzutragen. Beim Lasersinterverfahren erfolgt der Energieeintrag über einen gelenkten Laserstrahl. Beim so genannten High Speed Sintering (HSS)-Verfahren (EP 1648686) erfolgt der Energieeintrag über Infrarot (IR)-Strahler in Kombination mit einem selektiv in das Pulverbett gedruckten IR-Absorber. Das so genannte Selective Heat Sintering (SHS) nutzt die Druckeinheit eines konventionellen Thermodruckers, um thermoplastische Pulver selektiv aufzuschmelzen.

Auf Basis der Polymere, die heute in pulverbasierten additiven Fertigungsverfahren vorwiegend eingesetzt werden, entstehen Gegenstände, deren mechanische Eigenschaften sich grundlegend von der Charakteristik der Materialien unterscheiden können, wie sie in anderen kunststoffverarbeitenden Verfahren, wie dem Spritzgießen, bekannt sind. Bei der Verarbeitung durch die additiven Fertigungsverfahren verlieren die eingesetzten thermoplastischen Materialien ihre spezifische Charakteristik.

Polyamid 12 (PA12) ist der derzeit am meisten eingesetzte Werkstoff für pulverbasierte additive Fertigungsverfahren, wie z.B. dem Lasersintern. PA12 zeichnet sich durch hohe Festigkeit und Zähigkeit aus, wenn es im Spritzguss oder durch Extrusion verarbeitet wird. Ein handelsübliches PA12 zeigt beispielsweise nach dem Spritzgießen eine Bruchdehnung von mehr als 200%. PA12-Gegenstände, die mit dem Lasersinterverfahren hergestellt sind, zeigen hingegen Bruchdehnungen um 15%. Das Bauteil ist spröde und kann daher nicht mehr als typisches PA12-Bauteil angesehen werden. Gleiches gilt für Polypropylen (PP), welches als Pulver für das Lasersintern angeboten wird. Auch dieses Material versprödet und verliert damit die PP-typischen zäh-elastischen Eigenschaften. Gründe hierfür sind in der Morphologie der Polymere zu finden.

Während des Aufschmelzvorgangs mittels Laser oder IR und insbesondere beim Abkühlen entsteht eine unregelmäßige innere Struktur der so genannten teilkristallinen Polymere (beispielsweise PA12 und PP). Die innere Struktur (Morphologie) teilkristalliner Polymere ist teilweise durch hohe Ordnung gekennzeichnet. Ein gewisser Anteil der Polymerketten bildet beim Abkühlen kristalline, eng gepackte Strukturen aus. Während des Aufschmelzens und Abkühlens wachsen diese Kristallite unregelmäßig an den Grenzen der nicht komplett aufgeschmolzenen Partikel sowie an den ehemaligen Korngrenzen der Pulverpartikel und an im Pulver enthaltenen Additiven. Die Unregelmäßigkeit der so entstehenden Morphologie begünstigt unter mechanischer Belastung das Entstehen von Rissen. Die beim pulverbasierten additiven Verfahren nicht zu vermeidende Restporosität fördert das Risswachstum.

Spröde Eigenschaften der so entstandenen Bauteile sind das Resultat. Zur Erläuterung dieser Effekte wird auf European Polymer Journal 48 (2012), Seiten 1611-1621 verwiesen. Auch die im Lasersintern eingesetzten elastischen Polymere auf Basis von Block-Copolymeren zeigen ein für die eingesetzten Polymere untypisches Eigenschaftsprofil, wenn sie als Pulver mit additiven Fertigungsverfahren zu Gegenständen verarbeitet werden. Beim Lasersintern kommen heute thermoplastische Elastomere (TPE) zum Einsatz. Gegenstände, die aus den heute verfügbaren TPEs hergestellt werden, weisen nach dem Erstarren eine hohe Restporosität auf und die ursprüngliche Festigkeit des TPE-Werkstoffs ist nicht im daraus gefertigten Gegenstand messbar. In der Praxis werden diese porösen Bauteile daher nachträglich mit flüssigen, aushärtenden Polymeren infiltriert, um das erforderliche Eigenschaftsprofil einzustellen. Die Festigkeit und Dehnung bleibt trotz dieser zusätzlichen Maßnahme auf einem niedrigen Niveau. Der zusätzliche Verfahrensaufwand führt - neben den immer noch unzureichenden mechanischen Eigenschaften - zu einer schlechten Wirtschaftlichkeit dieser Materialien.

Bei Lasersinter-Verfahren unter Einsatz von Polymerpartikeln werden diese in der Regel in einem abgeschlossenen Volumen oder Kammer verarbeitet, damit die Partikel in einer erwärmten Atmosphäre verarbeitet werden können. Auf diese Weise kann die Temperaturdifferenz, die zum Sintern der Partikel durch Einwirkung des Lasers überwunden werden muss, verringert werden. Generell lässt sich feststellen, dass die thermischen Eigenschaften des Polymers die möglichen Verarbeitungstemperaturen in Lasersinter-Verfahren beeinflussen. Daher wurden im Stand der Technik vielfältige Lösungen für solche Polymere und deren Verarbeitungsverfahren vorgeschlagen.

WO 03/106146 A1 offenbart Partikel zur Verwendung beim Selektiven Laser Sintern (SLS) enthaltend einen Kern aus mindestens einem ersten Material, eine mindestens teilweise Beschichtung des Kerns mit einem zweiten Material, wobei das zweite Material eine niedrigere Erweichungstemperatur aufweist als das erste Material. Die Erweichungstemperatur des zweiten Materials beträgt weniger als circa 70 °C. Dieses Dokument offenbart weiterhin ein Verfahren zur Herstellung eines dreidimensionalen Gegenstandes mittels SLS aufweisend die Schritte: Auftragen einer Schicht aus Partikeln auf eine Zielfläche; Bestrahlen eines ausgewählten Teils der Schicht, entsprechend einem Querschnitt des Gegenstandes, mit einem Energiestrahl, so dass die Partikel im ausgewählten Teil verbunden werden; Wiederholen der Schritte des Auftragens und des Bestrahlens für eine Mehrzahl von Schichten, so dass die verbunden Teile der benachbarten Schichten sich verbinden, um den Gegenstand zu bilden. Es werden Partikel verwendet werden, die mindestens ein Material enthalten, dessen Erweichungstemperatur weniger als circa 70 °C beträgt.

WO 2015/197515 A1 beschreibt ein thermoplastisches pulverförmiges Mittel enthaltend 0,02 bis 0,5 Gew.-%, bezogen auf die Gesamtmenge an Mittel, Fließmittel und pulverförmiges thermoplastisches Polyurethan, wobei mindestens 90 Gew.-% des Mittels einen Teilchendurchmesser von kleiner 0,25 mm aufweist, wobei das thermoplastische Polyurethan erhältlich ist aus der Reaktion der Komponenten a) mindestens ein organisches Diisocyanat b) mindestens eine mit gegenüber Isocyanatgruppen reaktiven Gruppen aufweisenden Verbindung mit einem zahlenmittleren Molekulargewicht ($M_n$) von 500 g/mol bis 6000 g/mol und einer zahlenmittleren Funktionalität der Gesamtheit der Komponenten unter b) von 1,8 bis 2,5 c) mindestens ein Kettenverlängerungsmittel mit einem Molekulargewicht ($M_n$) von 60 - 450 g/mol und einer zahlenmittleren Funktionalität der Gesamtheit der Kettenverlängerungsmittel unter c) von 1,8 bis 2,5 in Gegenwart von d) gegebenenfalls Katalysatoren e) gegebenenfalls Hilfs- und/oder Zusatzmitteln f) gegebenenfalls einen oder mehrere Kettenabbrecher.

Das thermoplastische Polyurethan gemäß WO 2015/197515 A1 weist einen Schmelzbereich (DSC, Differential Scanning Calorimetry; zweite Aufheizung mit Aufheizrate 5K/min) von 20 bis 170° C und eine Shore A Härte gemäß DIN ISO 7619-1 von 50 bis 95 auf, hat bei einer Temperatur T eine Schmelzvolumenrate (melt volume rate (MVR)) gemäß ISO 1133 von 5 bis 15 $cm^3$/10 min und eine Änderung des MVR bei einer Erhöhung dieser Temperatur T um 20 °C von kleiner 90 $cm^3$/10 min auf. Der Einsatzzweck ist die Herstellung von Gegenständen in pulverbasierten additiven Fertigungsverfahren.

US 2005/0080191 A1 betrifft ein Pulversystem zur Verwendung in festen Freiform-Herstellungsverfahren, umfassend wenigstens ein Polymer mit reaktiven Eigenschaften und verschmelzbaren Eigenschaften, wobei das wenigstens eine Polymer ausgewählt ist, um mit einem flüssigen Bindemittel zu reagieren und bei einer Temperatur oberhalb des Schmelzpunkts oder der Glasübergangstemperatur des wenigstens einen Polymers verschmelzbar ist. Das wenigstens eine Polymer kann wenigstens ein reaktives Polymer und wenigstens ein verschmelzbares Polymer umfassen und das wenigstens eine schmelzbare Polymer kann einen Schmelzpunkt oder eine Glasübergangstemperatur im Bereich von ca. 50 °C bis ca. 250 °C aufweisen.

WO 2015/109143 A1 offenbart Systeme und Verfahren für die Freiform-Herstellung von Festkörpern, insbesondere Lasersinterverfahren, sowie diverse mit den Verfahren erhaltene Artikel. Die Systeme und Verfahren verwenden bestimmte thermoplastische Polyurethane, welche abgeleitet sind von (a) einer Polyisocyanat-Komponente, (b) einer Polyol-Komponente und (c) einer optionalen Kettenverlängerungs-Komponente, wobei das erhaltene thermoplastische Polyurethanpolymer eine Schmelzenthalpie von wenigstens 5.5 J/g, eine Kristallisationstemperatur Tc von über 70 °C und ein Δ(Tm:Tc) von 20 Grad bis 75 Grad aufweist, wobei Δ(Tm:Tc) die Differenz zwischen Tm (Schmelztemperatur) und Tc ist.

In der Praxis ist die Beheizung der Kammer in Lasersinter-Verfahren jedoch mit einem unerwünschten Temperaturgradienten von inneren Bereichen der Kammer zu außen liegenden Bereichen der Kammer verbunden und damit auch mit einem unerwünschten Temperaturgradienten innerhalb des Pulverbetts. Insbesondere bei teilkristallinen thermoplastischen Polymeren kann dieser Umstand aufgrund von unterschiedlichen Rekristallisationskinetiken zu Variationen in Materialeigenschaften innerhalb des fertigen Bauteils führen.

WO 2016/108154 A1 offenbart ein Lasersintersverfahren zur Herstellung eines Gegenstandes, wobei ein thermoplastisches Polymer mit einem Schmelzbereich unter 100°C insbesondere unter 70°C verwendet wird.

Im Stand der Technik existiert weiterhin der Bedarf an pulverbasierten additiven Herstellungsverfahren, in denen Polymere mit niedrigem Schmelzbereich eingesetzt werden können und in denen die erhaltenen Bauteile homogene Materialeigenschaften aufweisen.

Erfindungsgemäß vorgeschlagen wird ein Verfahren nach Anspruch 1 zur Herstellung eines Gegenstandes, umfassend die Schritte:

- Auftragen einer Schicht aus Partikeln auf eine Zielfläche;
- Einwirken von Energie auf einen ausgewählten Teil der Schicht, entsprechend einem Querschnitt des Gegenstandes, in einer Kammer, so dass die Partikel im ausgewählten Teil verbunden werden;
- Wiederholen der Schritte des Auftragens und des Einwirkens von Energie für eine Mehrzahl von Schichten, so dass die verbunden Teile der benachbarten Schichten sich verbinden, um den Gegenstand zu bilden;

wobei wenigstens ein Teil der Partikel ein schmelzbares Polymer aufweist.

Das schmelzbare Polymer ein Polyurethan ist, das erhältlich ist aus der Reaktion einer Polyisocyanatkomponente und einer Polyolkomponente, wobei die Polyolkomponente ein Polyesterpolyol umfasst, welches einen Stockpunkt (ASTM D5985) von > 25 °C aufweist.

Das schmelzbare Polymer weist einen Schmelzbereich (DSC, differential scanning calorimetry; 2. Aufheizung mit Aufheizrate 5 K/min.) von $\geq$ 20 °C bis $\leq$ 100 °C auf. Das schmelzbare Polymer weist ferner einen Betrag der komplexen Viskosität $|\eta^*|$ (bestimmt durch Viskosimetriemessung in der Schmelze mit einem Platte/Platte-Oszillationsviskosimeter gemäß ISO 6721-10 bei 100 °C und einer Scherrate von 1/s) von $\geq$ 10 Pas bis $\leq$ 1000000 Pas auf.

Schließlich beträgt die Temperatur innerhalb der Kammer $\leq$ 50 °C.

Im erfindungsgemäßen Verfahren wird ein Gegenstand schichtweise aufgebaut. Ist die Anzahl der Wiederholungen für Auftragen und Bestrahlen hinreichend gering, kann auch von einem zweidimensionalen Gegenstand gesprochen werden, der aufgebaut werden soll. Solch ein zweidimensionaler Gegenstand lässt sich auch als Beschichtung charakterisieren. Beispielsweise können zu dessen Aufbau $\geq$ 2 bis $\leq$ 20 Wiederholungen für Auftragen und Bestrahlen durchgeführt werden.

Es ist vorgesehen, dass wenigstens ein Teil der Partikel ein schmelzbares Polymer aufweist. Vorzugsweise weisen alle eingesetzten Partikel im Verfahren ein schmelzbares Polymer auf. Es ist ferner bevorzugt, dass mindestens 90 Gewichts-% der Partikel einen Teilchendurchmesser von $\leq$ 0.25 mm, bevorzugt $\leq$ 0.2 mm, besonders bevorzugt $\leq$ 0.15 mm aufweisen. Die Partikel mit dem schmelzbaren Polymer können beispielsweise homogen aufgebaut sein, so dass keine weiteren schmelzbaren Polymere in den Partikeln vorliegen. Bevorzugt wird der Partikeldurchmesser mittels statischer Lichtstreuung gemessen wie hier mit dem Malver Mastersizer 3000.

Die Energiequelle zum Verbinden der Teilchen kann elektromagnetische Energie wie zum Beispiel UV- bis IR-Licht sein. Denkbar ist auch ein Elektronenstrahl. Das Verbinden der Partikel im bestrahlten Teil der Partikelschicht erfolgt üblicherweise durch (teilweises) Aufschmelzen eines (teil)kristallinen Materials und Verbinden des Materials beim Abkühlen. Es ist aber auch möglich, dass andere Gestaltumwandlungen der Partikel wie ein Glasübergang, das heißt das Erwärmen des Materials auf eine Temperatur oberhalb der Glasübergangstemperatur, eine Verbindung der Partikel untereinander bewirken.

Neben dem schmelzbaren Polymer können die Partikel noch weitere Additive wie Füllstoffe, Stabilisatoren und dergleichen, aber auch weitere Polymere, enthalten. Der Gesamtgehalt an Additiven in den Partikeln beträgt bevorzugt $\geq$ 0,1 Gewichts-% bis $\leq$ 10 Gewichts-%, oder bevorzugt $\geq$ 1 Gewichts-% bis $\leq$ 5 Gewichts-%.

Das schmelzbare Polymer weist einen Schmelzbereich von $\geq$ 20 °C bis $\leq$ 100 °C, vorzugsweise von $\geq$ 25 °C bis $\leq$ 90 °C und mehr bevorzugt von $\geq$ 30 °C bis $\leq$ 80 °C auf. Bei der DSC-Messung zur Bestimmung des Schmelzbereichs wird das Material folgendem Temperaturzyklus unterworfen: 1 Minute bei —60 °C, danach Aufheizen auf 200 °C mit 5 Kelvin/Minute, dann Abkühlen auf -60 °C mit 5 Kelvin/Minute, dann 1 Minute bei —60 °C, dann Aufheizen auf 200 °C mit 5 Kelvin/Minute.

Im Folgenden wird insbesondere für Materialien, die nicht erfindungsgemäß sind auch von einem Erweichungspunkt gesprochen. Dieser Erweichungspunkt stellt die Temperatur innerhalb eines Schmelzbereiches dar, der mit der größten Viskositätsänderung einhergeht. Der Erweichungspunkt liegt folglich immer im Schmelzbereich eines Polymers.

Es ist möglich, dass das Temperaturintervall zwischen Beginn des Schmelzvorgangs und Ende des Schmelzvorgangs, wie es gemäß dem obigen DSC-Protokoll bestimmt werden kann, $\leq$ 20 °C, bevorzugt $\leq$ 10 °C und mehr bevorzugt $\leq$ 5 °C beträgt.

Das schmelzbare Polymer weist ferner einen Betrag der komplexen Viskosität |$\eta^*$| (bestimmt durch Viskosimetriemessung in der Schmelze mit einem Platte/Platte-Oszillationsviskosimeter gemäß ISO 6721-10 bei 100 °C und einer Scherrate von 1/s) von ≥ 10 Pas bis ≤ 1000000 Pas auf. Vorzugsweise beträgt |$\eta^*$| bei diesen Messbedingungen ≥ 100 Pas bis ≤ 500000 Pas, mehr bevorzugt ≥ 1000 Pas bis ≤ 200000 Pas.

Der Betrag der komplexen Viskosität |$\eta^*$| beschreibt das Verhältnis der viskoelastischen Moduln G' (Speichermodul) und G'' (Verlustmodul) zur Anregungsfrequenz $\omega$ in einer dynamischmechanischen Materialanalyse:

$$|\eta^*| = \sqrt{\left[\left(\frac{G'}{\omega}\right)^2 + \left(\frac{G''}{\omega}\right)^2\right]} = \frac{|G^*|}{\omega}$$

Es ist erfindungsgemäß weiterhin vorgesehen, dass die Temperatur innerhalb der Kammer ≤ 50 °C, beträgt. Vorzugsweise ist die Temperatur ≥ 0 °C bis ≤ 50 °C, mehr bevorzugt ≥ 5 °C bis ≤ 40 °C und besonders bevorzugt ≥ 10 °C bis ≤ 35 °C.

Es ist weiterhin bevorzugt vorgesehen, dass die Temperatur innerhalb der Kammer ≤ 50 °C, oder bevorzugt ≤ 35 °C, oder bevorzugt ≤ 20 °C, oder bevorzugt ≤ 10 °C, oder bevorzugt ≤ 0 °C, oder bevorzugt ≤ -10 °C, oder bevorzugt ≤ -20 °C, oder bevorzugt ≤ -30 °C, oder bevorzugt ≤ -40 °C, oder bevorzugt ≤ -50 °C beträgt. Vorzugsweise liegt die Temperatur innerhalb der Kammer in einem Bereich von ≥ -80 °C bis ≤ 50 °C, oder bevorzugt von ≥ -70 °C bis ≤ 45 °C, oder bevorzugt von ≥ -60 °C bis ≤ 40 °C, oder bevorzugt von ≥ -50 °C bis ≤ 35 °C, oder bevorzugt von ≥ -40 °C bis ≤ 30 °C, oder bevorzugt von ≥ -30 °C bis ≤ 20 °C. Weiterhin bevorzugt liegt die Temperatur innerhalb der Kammer in einem Bereich von ≥ 0 °C bis ≤ 50 °C, oder bevorzugt von ≥ 5 °C bis ≤ 40 °C, oder bevorzugt von ≥ 10 °C bis ≤ 35 °C.

Bevorzugt liegt das schmelzbare Polymer in amorpher, kristalliner oder teilkristalliner Form vor, wenn es in dem erfindungsgemäßen Verfahren eingesetzt wird. Bevorzugt liegt die Schmelztemperatur Tm des schmelzbaren Polymers bzw. die Glasübergangstemperatur Tg des amorphen Polymers, das in mindestens einem Teil der Partikel enthalten ist, das für das erfindungsgemäße Verfahren zur Herstellung eines Gegenstandes verwendet wird, in einem Bereich von 10 bis 100 °C, oder bevorzugt von 20 bis 80 °C, oder bevorzugt von 30 bis 50 °C oberhalb der Temperatur innerhalb der Kammer während des erfindungsgemäßen Verfahrens.

Die Kombination aus dem eher niedrigen Schmelzbereich und der komplexen Viskosität des schmelzbaren Polymers in Verbindung mit der eher niedrigen Temperatur der Kammer und somit der schmelzbaren Polymerpartikel, die von dem Energiestrahl bestrahlt werden, hat mehrere Vorteile. Es ist möglich, Bauteilverformungen ("Warping") durch räumlich unterschiedliche Kristallisationsvorgänge zu vermindern oder zu unterdrücken. Dadurch, dass bei einer Temperatur von unter 100 °C gearbeitet wird, lassen sich Blasenbildungen im Bauteil durch Wasserdampf vermeiden. Somit kann das Polymer größere Mengen an Wasser enthalten als bei höheren Temperaturen in der Kammer.

Unter niedrigem Schmelzbereich ist insbesondere eine niedrige Schmelztemperatur des Polymers zu verstehen.

Bei den komplexen Viskositäten im erfindungsgemäß angegebenen Bereich kann davon ausgegangen werden, dass bei einer gewählten Kammertemperatur, welche ≤ 50 °C beträgt, bei dem eingesetzten schmelzbaren Polymer keine oder nur technisch unbedeutende Klebrigkeit ("tackiness") auftritt. Unter Klebrigkeit wird insbesondere die Eigenklebrigkeit verstanden.

Ebenso kann das Ausmaß der Sublimation von organischen Verbindungen in die Kammer verringert werden. Dann können auch Weichmacher und Lösungsmittel enthaltende Polymere verarbeitet werden. Eine speziell getrocknete oder inerte Atmosphäre in der Kammer ist nicht erforderlich. Ebenso wird der Explosionsschutz in der Kammer verbessert, wenn bei einer Temperatur unterhalb des Flammpunkts der in der Kammer vorliegenden Substanzen gearbeitet wird.

Ausführungsformen und weitere Aspekte der Erfindung werden nachfolgend geschildert. Sie können beliebig miteinander kombiniert werden, sofern sich aus dem Kontext nicht eindeutig das Gegenteil ergibt.

In einer bevorzugten Ausführungsform des erfindungsgemäßen Verfahrens umfasst das Einwirken von Energie auf einen ausgewählten Teil der Schicht, entsprechend einem Querschnitt des Gegenstandes, so dass die Partikel im ausgewählten Teil verbunden werden, den folgenden Schritt:

- Bestrahlen eines ausgewählten Teils der Schicht, entsprechend einem Querschnitt des Gegenstandes, mit einem Energiestrahl in der Kammer, so dass die Partikel im ausgewählten Teil verbunden werden.

Diese Verfahrensform kann als selektives Sinterverfahren, insbesondere als selektives Lasersinterverfahren (SLS) angesehen werden. Der Energiestrahl zum Verbinden der Teilchen kann ein Strahl elektromagnetischer Energie wie zum Beispiel ein "Lichtstrahl" von UV- bis IR-Licht sein. Vorzugsweise ist der Energiestrahl ein Laserstrahl, besonders bevorzugt mit einer Wellenlänge zwischen 600 nm und 15 $\mu$m. Der Laser kann als Halbleiterlaser oder als Gaslaser ausgeführt sein. Denkbar ist auch ein Elektronenstrahl. Das Verbinden der Partikel im bestrahlten Teil der Partikelschicht erfolgt üblicherweise durch (teilweises) Aufschmelzen eines (teil)kristallinen Materials und Verbinden des Materials beim Abkühlen. Es ist aber auch möglich, dass andere Gestaltumwandlungen der Partikel wie ein Glasübergang, das heißt das Erwärmen des Materials auf eine Temperatur oberhalb der Glasübergangstemperatur, eine Verbindung der Partikel untereinander bewirken.

Bevorzugt findet das Einwirken von Energie auf einen ausgewählten Teil der Schicht in dem erfindungsgemäßen Verfahren durch Bestrahlen mit mindestens einem Laser, bevorzugt 1 bis 5 Lasern, bevorzugt einem Dioden- oder einem $CO_2$-Laser, mit einer Wattleistung von bevorzugt 1 W bis 200 W, oder bevorzugt von 5 W bis 150 W, oder bevorzugt von 10 bis 120 W pro Laser. Bevorzugt weist der Laser einen Durchmesser des Laserstrahls ("Laserspot") von 0,01 mm bis 5 mm, oder bevorzugt von 0,05 mm bis 1 mm, oder bevorzugt von 0,1 mm bis 0,5 mm. Bevorzugt liegt die verwendete Scangeschwindigkeit in einem Bereich von 1 bis 50 m/s, oder bevorzugt von 2 bis 30 m/s, oder bevorzugt von 5 bis 20 m/s. Bevorzugt liegt der Bestrahlungsabstand der scannenden Laserlinien ("Hatch Distance") in einem Bereich von 0,01 mm bis 5 mm, oder bevorzugt von 0,05 mm bis 1 mm, oder bevorzugt von 0,1 mm bis 0,5 mm. Bevorzugt liegt die Baugeschwindigkeit in einem Bereich von 1 bis 10000 ml / h, oder bevorzugt 5 bis 6000 ml / h, oder bevorzugt von 10 bis 5000 ml / h, oder bevorzugt 15 bis 4000 ml / h. Typische Energieeinträge liegen in einem Bereich von 0,005 bis 0,5 $J/mm^2$, oder bevorzugt von 0,007 bis 0,2 $J/mm^2$, oder bevorzugt von 0,01 bis 0,1 $J/mm^2$.

In einer weiteren bevorzugten Ausführungsform des erfindungsgemäßen Verfahrens umfasst das Einwirken von Energie auf einen ausgewählten Teil der Schicht, entsprechend einem Querschnitt des Gegenstandes, so dass die Partikel im ausgewählten Teil verbunden werden, die folgenden Schritte:

- Auftragen einer Flüssigkeit auf einen ausgewählten Teil der Schicht, entsprechend einem Querschnitt des Gegenstandes, wobei die Flüssigkeit die Absorption von Energie in den von ihr kontaktierten Bereichen der Schicht relativ zu den nicht von ihr kontaktierten Bereichen erhöht;

- Bestrahlen der Schicht in der Kammer, so dass die Partikel in von der Flüssigkeit kontaktierten Bereichen der Schicht miteinander verbunden werden und die Partikel in nicht von der Flüssigkeit kontaktierten Bereichen der Schicht nicht miteinander verbunden werden.

Bei dieser Ausführungsform kann beispielsweise eine Flüssigkeit enthaltend einen IR-Absorber mittels Inkjet-Verfahren auf die Schicht aufgetragen werden. Das Bestrahlen der Schicht führt zu einer selektiven Erwärmung derjenigen Partikel, welche in Kontakt mit der Flüssigkeit samt IR-Absorber stehen. Auf diese Weise kann ein Verbinden der Partikel erreicht werden.

Die Energiequelle zum selektiven Verbinden der Partikel ist insbesondere ein UV- bis IR-Strahler. Das Verbinden der Partikel im bestrahlten Teil der Partikelschicht erfolgt üblicherweise durch (teilweises) Aufschmelzen eines (teil)kristallinen Materials und Verbinden des Materials beim Abkühlen. Es ist aber auch möglich, dass andere Gestaltumwandlungen der Partikel wie ein Glasübergang, das heißt das Erwärmen des Materials auf eine Temperatur oberhalb der Glasübergangstemperatur, eine Verbindung der Partikel untereinander bewirken.

In einer weiteren bevorzugten Ausführungsform des erfindungsgemäßen Verfahrens wird das Innere der Kammer zumindest zeitweise gekühlt. Geeignete Kühlmethoden sind unter anderem die Kühlung einer oder mehrerer Wände der Kammer oder das Bereitstellen von kaltem, inerten Gas innerhalb der Kammer. Es ist alternativ möglich, dass das Innere der Kammer zumindest zeitweise nicht beheizt wird. Dann wird die durch das Einwirken von Energie eingetragene thermische Energie zur Aufrechterhaltung der gewünschten Temperatur in der Kammer ausgenutzt.

In einer weiteren bevorzugten Ausführungsform des erfindungsgemäßen Verfahrens weist das schmelzbare Polymer eine Shore-Härte (DIN ISO 7619-1) von ≥ 40A bis ≤ 80D auf. Bevorzugt sind Shore-Härten von ≥ 40A bis ≤ 70D, mehr bevorzugt ≥ 50A bis ≤ 50D.

Erfindungsgemäß ist das schmelzbare Polymer ein Polyurethan, das erhältlich ist aus der Reaktion einer Polyisocyanatkomponente und einer Polyolkomponente, wobei die Polyolkomponente ein Polyesterpolyol umfasst, welches einen Stockpunkt (ASTM D5985) von ≥ 25 °C aufweist.

Gegebenenfalls können bei der Reaktion zum Polyurethan weiterhin Diole des Molekulargewichtsbereichs von ≥ 62 bis ≤ 600 g/mol als Kettenverlängerungsmittel eingesetzt werden.

Die Polyisocyanatkomponente kann ein symmetrisches Polyisocyanat und/oder ein nichtsymmetrisches Polyisocyanat umfassen. Beispiele für symmetrische Polyisocyanate sind 4,4'-MDI und HDI.

Bei nicht-symmetrischen Polyisocyanaten ist die sterische Umgebung einer NCO-Gruppe im Molekül von der sterischen Umgebung einer weiteren NCO Gruppe verschieden. Es reagiert dann eine Isocyanatgruppe schneller mit gegenüber Isocyanaten reaktiven Gruppen, beispielsweise OH-Gruppen, während die verbleibende Isocyanatgruppe weniger reaktiv ist. Eine Folge des nicht-symmetrischen Aufbaus des Polyisocyanats ist, dass die mit diesen Polyisocyanaten aufgebauten Polyurethane auch eine weniger gerade Struktur aufweisen.

Beispiele geeigneter nicht-symmetrischer Polyisocyanate sind ausgewählt aus der Gruppe bestehend aus: 2,2,4-Trimethyl-hexamethylendiisocyanat, Ethylethylendiisocyanat, nicht-symmetrische Isomere des Dicyclohexylmethandiisocyanat (H₁₂-MDI), nicht-symmetrische Isomere des 1,4-Diisocyanatocyclohexan, nicht-symmetrische Isomere des 1,3-Diisocyanatocyclohexan, nicht-symmetrische Isomere des 1,2-Diisocyanatocyclohexan, nicht-symmetrische Isomere des 1,3-Diisocyanatocyclopentan, nicht-symmetrische Isomere des 1,2-Diisocyanatocyclopentan, nicht-symmetrische Isomere des 1,2-Diisocyanatocyclobutan, 1-Isocyanatomethyl-3-isocyanato-1,5,5-trimethylcyclohexan (Isophorondiisocyanat, IPDI), 1-Methyl-2,4-diisocyanato-cyclohexan, 1,6-Diisocyanato-2,2,4-trimethylhexan, 1,6-Diisocyanato-2,4,4-trimethylhexan, 5-Isocyanato-1-(3-isocyanatoprop-1-yl)-1,3,3-trimethyl-cyclohexan, 5-Isocyanato-1-(4-isocyanatobut-1-yl)-1,3,3-trimethyl-cyclohexan, 1-Isocyanato-2-(3-isocyanatoprop-1-yl)-cyclohexan, 1-Isocyanato-2-(2-isocyanatoeth-1-yl)-cyclohexan, 2-Heptyl-3,4-bis(9-isocyanatononyl)-1-pentyl-cyclohexan, Norbonandiisocyanatomethyl, 2,4'-Diphenylmethandiisocyanat (MDI), 2,4- und 2,6-Toluylendiisocyanat (TDI), Derivate der aufgeführten Diisocyanate, insbesondere dimerisierte oder trimerisierte Typen, oder einer Kombination aus mindestens zwei hiervon.

Bevorzugt sind 4,4'-MDI oder eine Mischung enthaltend IPDI und HDI als Polyisocyanatkomponente.

Nach Anspruch 1 weist die Polyolkomponente ein Polyesterpolyol auf, welches einen Stockpunkt (No Flow Point, ASTM D5985) von $\geq$ 25 °C, vorzugsweise $\geq$ 35 °C, mehr bevorzugt $\geq$ 35 °C bis $\leq$ 55 °C aufweist. Zur Bestimmung des Stockpunkts wird ein Messgefäß mit der Probe in eine langsame Rotation (0.1 U/min) versetzt. Ein flexibel gelagerter Messkopf taucht in die Probe ein und wird bei Erreichen des Stockpunkts durch die sprunghafte Zunahme der Viskosität aus seiner Lage wegbewegt, die resultierende Kippbewegung löst einen Sensor aus.

Ohne auf eine Theorie beschränkt zu sein wird angenommen, dass Polyurethane auf der Basis der zuvor diskutierten nicht-symmetrischen Polyisocyanate und Polyesterpolyole mit den angegebenen Stockpunkten derart aufgebaut sind, dass die von den Polyisocyanaten stammenden Gruppen im Polymer Weichsegmente darstellen und die von den Polyesterpolyen stammenden Gruppen im Polymer Hartsegmente darstellen.

Bei den erfindungsgemäßen vorgesehenen Temperaturen in der Kammer des Verarbeitungs-Geräts wird angenommen, dass die Beweglichkeit der Polyesterketten in Polyurethan so eingeschränkt ist, wie es beim freien Polyesterpolyol unterhalb seines Stockpunkts wäre. Entsprechend weist das Polyurethanpolymer unter den Verarbeitungsbedingungen (vorzugsweise nach einer Zeit von $\geq$ 1 Minute bis $\leq$ 2 Stunden) keine oder nur eine technisch unbedeutende Klebrigkeit ("tackiness") auf.

Beispiele für Polyesterpolyole, welche solch einen Stockpunkt aufweisen können, sind Reaktionsprodukte von Phthalsäure, Phthalsäureanhydrid oder symmetrischen $\alpha,\omega$-C₄- bis C₁₀-Dicarbonsäuren mit einem oder mehreren C₂- bis C₁₀-Diolen. Sie weisen bevorzugt ein zahlenmittleres Molekulargewicht $M_n$ von $\geq$ 400 g/mol bis $\leq$ 6000 g/mol auf. Geeignete Diole sind insbesondere Monoethylenglykol, 1,4-Butandiol, 1,6-Hexandiol und Neopentylglykol.

Bevorzugte Polyesterpolyole sind nachfolgend unter Angabe ihrer Säure- und Diolkomponenten angegeben: Adipinsäure + Monoethylenglykol; Adipinsäure + Monoethylenglykol + 1,4-Butandiol; Adipinsäure + 1,4-Butandiol; Adipinsäure + 1,6-Hexandiol + Neopentylglykol; Adipinsäure + 1,6-Hexandiol; Adipinsäure + 1,4-Butandiol + 1,6-Hexandiol; Phthalsäure(anhydrid) + Monoethylenglykol + Trimethylolpropan; Phthalsäure(anhydrid) + Monoethylenglykol. Bevorzugte Polyurethane werden aus einer Mischung enthaltend IPDI und HDI als Polyisocyanatkomponente und einer Polyolkomponente enthaltend ein zuvor genanntes bevorzugtes Polyesterpolyol erhalten. Besonders bevorzugt ist die Kombination einer Mischung enthaltend IPDI und HDI als Polyisocyanatkomponente mit einem Polyesterpolyol aus Adipinsäure + 1,4-Butandiol + 1,6-Hexandiol zum Aufbau der Polyurethane.

Es ist femer bevorzugt, dass die Polyesterpolyole eine OH-Zahl (DIN 53240) von $\geq$ 25 bis $\leq$ 170 mg KOH/g und/oder eine Viskosität (75 °C, DIN 51550) von $\geq$ 50 bis $\leq$ 5000 mPas aufweisen.

Als Beispiel genannt sei ein Polyurethan, das erhältlich ist aus der Reaktion einer Polyisocyanatkomponente und einer Polyolkomponente, wobei die Polyisocyanatkomponente ein HDI und IPDI umfasst und wobei die Polyolkomponente ein Polyesterpolyol umfasst, welches aus der Reaktion einer Reaktionsmischung umfassend Adipinsäure sowie 1,6-Hexandiol und 1,4-Butandiol mit einem Molverhältnis dieser Diole von $\geq$ 1:4 bis $\leq$ 4:1 erhältlich ist und welches ein zahlenmittleres Molekulargewicht $M_n$ (GPC, gegen Polystyrol-Standards) von $\geq$ 4000 g/mol bis $\leq$ 6000 g/mol aufweist. Solch ein Polyurethan kann einen Betrag der komplexen Viskosität $|\eta^*|$ (bestimmt durch Viskosimetriemessung in der Schmelze mit einem Platte/Platte-Oszillationsviskosimeter gemäß ISO 6721-10 bei 100 °C und einer Scherrate von 1/s) von $\geq$ 4000 Pas bis $\leq$ 160000 Pas aufweisen.

Ein weiteres Beispiel für ein geeignetes Polyurethan ist:

1. Weitgehend lineare, endständige Hydroxylgruppen aufweisende Polyesterpolyurethane wie in EP 0192946 A1 beschrieben, hergestellt durch Umsetzung von

    a) Polyesterdiolen eines über 600 liegenden Molekulargewichts und gegebenenfalls

    b) Diolen des Molekulargewichtsbereichs von 62 bis 600 g/mol als Kettenverlängerungsmittel mit

    c) aliphatischen Diisocyanaten

unter Einhaltung eines Äquivalentverhältnisses von Hydroxylgruppen der Komponenten a) und b) zu Isocyanatgruppen der Komponente c) von 1:0,9 bis 1:0,999, wobei die Komponente a) zu mindestens 80 Gew.-% aus Polyesterdiolen des Molekulargewichtsbereichs 4000 bis 6000 auf Basis von (i) Adipinsäure und (ii) Gemischen aus 1,4-Dihydroxybutan und 1,6-Dihydroxyhexan im Molverhältnis der Diole von 4:1 bis 1:4 besteht.

In den unter 1. genannten Polyesterpolyurethanen ist bevorzugt, dass die Komponente a) zu 100 % aus einem Polyesterdiol des Molekulargewichtsbereichs 4000 bis 6000 besteht, bei deren Herstellung als Diolgemisch ein Gemisch aus 1,4-Dihydroxybutan und 1,6-Dihydroxyhexan im Molverhältnis von 7:3 bis 1:2 verwendet worden ist.

In den unter 1. genannten Polyesterpolyurethanen ist ferner bevorzugt, dass die Komponente c) IPDI und weiterhin HDI enthält.

In den unter 1. genannten Polyesterpolyurethanen ist ferner bevorzugt, dass bei ihrer Herstellung als Komponente b) Alkandiole, ausgewählt aus der Gruppe bestehend aus: 1,2-Dihydroxyethan, 1,3-Dihydroxypropan, 1,4-Dihydroxybutan, 1,5-Dihydroxypentan, 1,6-Dihydroxyhexan oder einer Kombination aus mindestens zwei hiervon, in einer Menge von bis zu 200 Hydroxyläquivalentprozent, bezogen auf die Komponente a), mitverwendet worden sind.

In einer weiteren bevorzugten Ausführungsform des erfindungsgemäßen Verfahrens weist das schmelzbare Polymer nach Erwärmen auf 100 °C und Abkühlen auf 20 °C bei einer Abkühlrate von 4 °C/min in einem Temperaturintervall von 25 °C bis 40 °C für $\geq$ 1 Minute (bevorzugt $\geq$ 1 Minute bis $\leq$ 100 Minuten, mehr bevorzugt $\geq$ 10 Minuten bis $\leq$ 60 Minuten), ein Speichermodul G' (bestimmt bei der jeweils herrschenden Temperatur mit einem Platte/Platte-Oszillationsviskosimeter gemäß ISO 6721-10 bei einer Scherrate von 1/s) von $\geq$ 100 kPa bis $\leq$ 1 MPa auf und nach Abkühlen auf 20 °C und Lagerung für 120 Minuten bei 20 °C ein Speichermodul G' (bestimmt bei 20 °C mit einem Platte/Platte-Oszillationsviskosimeter gemäß ISO 6721-10 bei einer Scherrate von 1/s) von $\geq$ 10 MPa (bevorzugt $\geq$ 100 MPa) auf.

In einer weiteren bevorzugten Ausführungsform des erfindungsgemäßen Verfahrens weist wenigstens ein Teil der Partikel das schmelzbare Polymer sowie ein weiteres Polymer und/oder anorganische Partikel auf. Dann werden sogenannte Co-Pulver eingesetzt. Das weitere Polymer kann mit dem schmelzbaren Polymer eine oder mehrere Phasen bilden. Es kann durch Einwirkung des Energiestrahls in der Kammer ganz oder teilweise aufgeschmolzen werden oder auch im festen Zustand verbleiben. Beispiele für anorganische Partikel sind Füllstoffe wie Kieselsäure, Kalksteinmehl, natürliche, gemahlene Kreiden (Calciumcarbonate oder Calcium-Magnesiumcarbonate), Schwerspat, Talk, Glimmer, Tone oder gegebenenfalls auch Ruß. Der Gesamtanteil des weiteren Polymers und/oder der anorganischen Partikel kann beispielsweise $\geq$ 5 Gewichts-% bis $\leq$ 50 Gewichts-%, bezogen auf das Gesamtgewicht der Partikel, betragen.

In einer weiteren bevorzugten Ausführungsform des erfindungsgemäßen Verfahrens wird der gebildete Gegenstand einer Nachbehandlung unterzogen, die ausgewählt ist aus der Gruppe bestehend aus: mechanisches Glätten der Oberfläche, gezieltes lokales Erwärmen, Erwärmen des gesamten Gegenstands, gezieltes lokales Abkühlen, Abkühlen des gesamten Gegenstands, Kontaktieren des Gegenstands mit Wasserdampf, Kontaktieren des Gegenstands mit dem Dampf eines organischen Lösungsmittels, Bestrahlen des Gegenstands mit elektromagnetischer Strahlung, Immersion des Gegenstands in ein Flüssigkeitsbad oder einer Kombination aus mindestens zwei hiervon. Solche Nachbehandlungen dienen vor allem der Verbesserung der Oberflächengüte des Gegenstands.

In einer weiteren bevorzugten Ausführungsform des erfindungsgemäßen Verfahrens sind die Partikel nach dem Schritt des Auftragens einer Schicht der Partikel auf die Zielfläche wenigstens teilweise in einer flüssigen Phase suspendiert. Die flüssige Phase kann in einem späteren Stadium des Verfahrens entfernt werden. Nach dem Auftragen einer Partikelschicht kann so gezielt ein Bereich der Partikelschicht mit einer Tinte versehen werden, welche in Kombination mit dem Energiestrahl zu einer Verbindung der Partikel untereinander führt. Somit werden Elemente des High Speed Sintering (HSS)-Verfahrens übernommen.

In einer weiteren bevorzugten Ausführungsform des erfindungsgemäßen Verfahrens wird der Gegenstand auf einem Substrat gebildet und bleibt nach Abschluss des Verfahrens mit dem Substrat verbunden. Somit ist die Zielfläche im ersten Schritt des ersten Durchgangs im erfindungsgemäßen Verfahren das Substrat. Das Substrat ist vorzugsweise ein Bauteil, welches zur Verbindung mit anderen Bauteilen vorgesehen ist. Es ist weiter bevorzugt, dass ein Polyurethanpolymer als Material für den Gegenstand eingesetzt wird. Das Polymer kann aufgrund seiner Eigenschaften als Klebstoff und/oder als Lack nutzbar sein. Durch das erfindungsgemäße Verfahren lässt sich somit eine Klebstoff-Schicht, eine Klebstoff-Fuge, eine Lack-Schicht oder eine Beschichtung gezielt auf einem Werkstück aufbringen. Die Klebstoff-Schicht oder Klebstoff-Fuge, die durch ein erfindungsgemäßes Verfahren aufgebracht wurde, kann sich auch chemisch und optisch von gesinterten Klebstoff-Schichten unterscheiden. Durch Auftrags-Sintern erhaltene Klebstoff-Schichten weisen eine niedrigere Dichte und in der Regel eine mattere Oberfläche auf. Die Lack-Schicht oder Beschichtung, die durch ein erfindungsgemäßes Verfahren aufgebracht wurde, kann sich auch chemisch und optisch von eingebrannten Pulverlack Schichten unterscheiden. Durch Auftrags-Sintern erhaltene Lack-Schichten weisen eine positionsgenaue Auftragung und in der Regel eine mattere Oberfläche auf.

Die vorliegende Anmeldung offenbart weiterhin einen Gegenstand, der durch ein erfindungsgemäßes Verfahren hergestellt wurde. In einer bevorzugten Ausführungsform ist der Gegenstand als Klebstoff-Formkörper ausgebildet. Die Form des Klebstoff-Formkörpers kann dabei passgenau für zu verklebende Bauteile gewählt werden. Solch ein Formkörper kann bei Raumtemperatur nicht klebrig sein und auf Vorrat produziert werden. Er kann durch entsprechende Manipulations-Werkzeuge an seinen Bestimmungsort platziert werden, durch Wärme aktiviert werden und auf diese Weise zu verklebende Bauteile miteinander verkleben.

Darüber hinaus wird ein Artikel offenbart, hergestellt durch ein erfindungsgemäßes Verfahren mit den Merkmalen, dass der Gegenstand auf einem Substrat gebildet wird und nach Abschluss des Verfahrens mit dem Substrat verbunden bleibt, mit einem Substrat und einem mit dem Substrat verbundenen Gegenstand, wobei der Gegenstand als Klebstoff-Fuge oder als Lack-Bereich ausgebildet ist.

Die Partikel, die in den nachfolgenden Experimenten verwendet wurden, wurden durch mechanisches Mahlen der Ausgangsmaterialien in Form von Granulat, Pellets, vorzerkleinertes Grobgut o.Ä. mit einem maximalen Durchmesser von 4 bis 6 mm, welche als grobes Pulver oder Pellets vorlagen, bei Temperaturen unterhalb von 0 °C hergestellt. Alternativ zum Mahlen wurden geeignete Pulver bei Temperaturen unterhalb von 0 °C, bevorzugt unterhalb von -20 °C, oder bevorzugt unterhalb von -60 °C durch z.B. Schleifen, Zerreiben, Fragmentieren oder Stampfen hergestellt. Ebenfalls denkbar ist das Ausfällen von Partikeln aus homogenen Lösungen durch die Überschreitung einer kritischen Konzentration (Coagulation) oder mit Hilfe eines oder mehrerer Fällungsmittel / Cosolventien. Auch durch Mikrogranulierung oder durch Sprühtrocknung / Verfestigung (z.B. aus Schmelzen oder aus Lösungen) können entsprechende Pulver hergestellt werden.

Die verwendeten Desmomelt®-Partikel wurden durch Cryo-Mahlen von Desmomelt® VPKA8702 Granulat, kommerziell erhältlich von der Covestro Deutschland AG, in einer Stiftmühle (Rotator/Stator wie zum Beispiel eine Stiftmühle GSM 250 von ACU-Pharma) mit flüssigem Stickstoff als Kühlagenz erhalten. Dazu wurde Demomelt® VPKA8702 Granulat mit flüssigem Stickstoff vorgekühlt und mit weiterem flüssigem Stickstoff in das Mahlwerkzeug gegeben, um die Temperatur mindestens niedriger als -80°C während des gesamten Mahlvorgangs zu halten. Die Partikel wurden im Anschluss mit verschiedenen Siebgrößen von 500 $\mu$m, über 250 $\mu$m, bis zu 125 $\mu$m gesiebt. Die zurückgebliebenen Partikel > 125 $\mu$m wurden wieder in den Mahlvorgang, wie zuvor beschrieben, zu neuem Granulat gegeben. Das unter 125 $\mu$m gesiebte Pulver wurde aufgetaut und auf Raumtemperatur gebracht.

Die verwendeten Dispercoll®-Partikel auf Basis von kommerziell erhältlichem Dispercoll U XP 2682 der Covestro Deutschland AG, wurden aus einer stabilen wässrigen Dispersion durch Ausfrieren bei -20 °C ausgefällt, filtriert und vor dem Cryo-Mahlen in einem Trockenschrank der Firma Binder FDL115 für 48 Stunden bei 30°C getrocknet. Dazu wurde das Pulver auf einem Blech ausgebreitet. Es wurde das gleiche Prozedere zum Vermahlen angewendet, wie für die Bereitstellung der Demomelt® Partikel wie zuvor beschrieben.

Als Vergleichsmaterial wurden Polyamid-Partikel mit dem Markennamen Polyamide FS 3300 PA, vertrieben von der Firma Hunan Farsoon High-tech Co.,Ltd ohne weiter Vorbehandlung verwendet.

Zur Herstellung von Gegenständen durch Verschmelzen von Polymerpartikeln aus Materialien, die erfindungsgemäß geeignet sind, wie zum Beispiel Dispercoll® UXP2682 von der Covestro Deutschland AG, Desmomelt® VPKA8702 von der Covestro Deutschland AG, oder aus Materialien für Vergleichsversuche, wie zum Beispiel Polyamid FS 3300 PA von der Hunan Farsoon High-tech Co.,Ltd, wurden 12 g des jeweiligen Polymers in Partikelform in einen Aluminium-Trog mit einem Durchmesser von 60 mm und einer Tiefe von 8 mm gefüllt und glatt gestrichen. Die so hergestellten Proben wurden bei unterschiedlichen Temperaturen für 20 Stunden gelagert, sodass gewährleistet war, dass das gesamte Pulver die gewünschte Temperatur vor dem Sinterprozess aufwies. Es wurde zu jedem Material jeweils eine Probe bei -78 °C, bei -28 °C, bei 10 °C, bei 25 °C, bei 41 °C, und bei 51 °C bis zur Temperaturkonstanz (mindestens 20 h) vortemperiert. Für das Temperieren auf -78°C wurde die Temperatur durch Lagern in Trockeneis eingestellt. Für die anderen Temperaturen kamen herkömmliche Kühlschränke und Trockenschränke zum Einsatz. Für alle Temperaturen unterhalb von Raumtemperatur (25 °C) wurden Kühlschränke von Liebherr-International Deutschland GmbH des Typs Liebherr® Comfort verwendet, während für die Lagerung bei und oberhalb von 25 °C beheizbare Trockenschränke der Firma Heraeus des Typs Heraeus® Thermo Scientific verwendet wurden. Nach der Lagerung über mindestens 20 Stunden bei der entsprechenden Temperatur wurden die Proben innerhalb von 20 Sekunden in die bei 23°C befindliche Kammer eines SLS Druckers der Firma Sharebot S.r.l., Italien des Typs Snow White überführt und der Sinterprozess wurde innerhalb von weiteren 10 Sekunden gestartet. Es wurden Testkörper mit einem Durchmesser von 20 mm mit jeweils einer Lage an Partikeln hergestellt. Die Laserleistung des verwendeten $CO_2$ Lasers betrug beim Sintern 6,3 W, die Scangeschwindigkeit betrug 1,8 m/s und der Bestrahlungsabstand ("Hatch Distance") betrug 0,1 mm. Dies entspricht einem Energieeintrag von 0,035 J/mm². Die gesinterten Testkörper wurden mit einer Pinzette aus den Tiegeln entnommen und mit Druckluft vorsichtig von lose anhaftenden Partikeln gereinigt. Die Testkörper wurden mit Hilfe einer Waage vom Typ Mettler Toledo MS304S gewogen und die Dicke mit einer Präzisions-Schieblehre der Marke Holex bestimmt. Die Porösität, die Rauhigkeit sowie die Tendenz des Verbackens, auch "caking" genannt, und des Verwindens, auch "warping" genannt, wurde vergleichend optisch bestimmt. Unter "kein warping", gemäß der Tabelle 1 und 2 wird verstanden, dass per Augenschein der Testkörper plan erscheint, also keine Verwindung in z-Richtung, parallel zur Schichtoberfläche, aufweist. Dementsprechend werden Testkörper in Tabelle 1 oder 2 mit dem Hinweis "warping" versehen, wenn bereits leichte Anzeichen einer Erhöhung bzw. Verwindung in z-Richtung erkennbar waren. Unter "kein caking" wird verstanden, dass nach milder Reinigung des Testkörpers mit Druckluft von < 2 bar die Geometrie des Artikels der vorbestimmten von 20 mm Durchmesser entspricht und nicht durch deutlich sichtbare Anhaftungen von Partikeln verändert wird. Unter "caking" wird entsprechend verstanden, dass nach Reinigung des Testkörpers noch mindestens an einer Stelle deutlich sichtbar Partikel an dem Testkörper anhafteten, die nicht zu der gewünschten, vorbestimmten Geometrie des herzustellenden Testkörpers gehören. Eine "geschlossene Schicht" unter dem Merkmal Porosität in den Tabellen 1 und 2 bedeutet, dass per Auge keine größeren Lücken (ca. > 0,3 mm Durchmesser) in der Schicht zu erkennen sind. In Tabelle 1 sind die Ergebnisse der Versuche an den erfindungsgemäß geeigneten Materialien nach dem erfindungsgemäßen Verfahren und den nicht-erfindungsgemäß geeigneten Materialien gemäß dem erfindungsgemäßen Verfahren gezeigt. Tabelle 2 zeigt Ergebnisse dieser Materialien unter sonst gleichen Bedingungen mit dem Unterschied, dass mit einem doppelten Energieeintrag von 0,070 J/mm$^2$ gearbeitet wurde. Es konnte gezeigt werden, dass schon bei einer Materialtemperatur von 50 °C, entsprechend einer Bauraumtemperatur von 50 °C, aus den erfindungsgemäß geeigneten Materialien keine brauchbaren versinterten Produkte erhalten werden konnten. Durch eine Absenkung der Materialtemperatur im Sinterprozess auf unter 50 °C, entsprechend einer Absenkung der Bauraumtemperatur auf unter 50 °C, konnte beim Material Desmomelt® VPKA8702 eine Sinterschicht in Zielform des herzustellenden Gegenstandes erreicht werden, wobei das Material zwar noch ein leichtes caking aber schon kein warping aufweist.

Wird die Material-/Bauraumtemperatur weiter abgesenkt, zum Beispiel auf 25 °C, 10 °C, -28 °C und -78 °C konnte für die in Tabellen 1 und 2 mit (*) markierten, erfindungsgemäß geeigneten Materialien gezeigt werden, dass die Ergebnisse mit abnehmender Temperatur deutlich besser wurden. Temperaturen unterhalb von -78 °C sind technisch weniger wirtschaftlich, daher wurden keine niedrigeren Temperaturen verwendet. Es zeigte sich, dass bei erfindungsgemäßen Materialien mit einem Erweichungspunkt von 20°C bis 100 °C ein gekühlter Bauraum, der eine gewünscht kontrollierte niedrige Materialtemperatur beim Lasersinterprozess ermöglicht, deutliche Vorteile beim Erreichen der gewünschten Maßgenauigkeit und Dichte von lasergesinterten Baukörpern sogar bei den verwendeten vergleichsweise geringen Laserenergien ermöglicht. Im Gegensatz zu den erfindungsgemäßen Polymerpulvern mit einer Erweichungstemperatur von 20°C bis 100 °C werden bei typischen SLS Polymerpulvern wie dem Vergleichsmaterial FS 3300 PA mit einer Erweichungstemperatur von ca.183°C bei niedrigen Temperaturen keine gewünschten, sondern nur spröde, wenig gesinterte Produkte erhalten.

Tabelle 1: Vergleich der Testkörper von erfindungsgemäß geeignete Materialien (mit * gekennzeichnet) und nicht-erfindungsgemäßen Materialien

| Materialtemperatur (zur Simulation einer gewünschten Bauraum/Material-temperatur) [°C] | Parameter / Eigenschaft | FS 3300 PA | Desmomelt® VPKA8702 (*) | Dispercoll® UXP2682 (*) |
|---|---|---|---|---|
| 51 | Dicke [mm] | 0,25±0,01 | verfestigte, ungeformte Schmelze | verfestigte, ungeformte Schmelze |
| | Gewicht [g] | 0,016±0,001 | | |
| | Porosität | offenporig | | |
| | Warping | kein warping | | |
| | Caking | kein caking | | |
| 41 | Dicke [mm] | 0,25±0,01 | 1,40±0,01 | verfestigte, ungeformte Schmelze |
| | Gewicht [g] | 0,016±0,001 | 0,118±0,001 | |
| | Porosität | offenporig | geschlossene Schicht | |
| | Warping | kein warping | kein warping | |
| | Caking | kein caking | caking | |
| 25 | Dicke [mm] | 0,29±0,01 | 0,72±0,01 | 1,63±0,01 |
| | Gewicht [g] | 0,013±0,001 | 0,074±0,001 | 0,091±0,001 |
| | Porosität | harte poröse Schicht | geschlossene Schicht | geschlossene Schicht |
| | Warping | kein warping | kein warping | warping |
| | Caking | kein caking | kein caking | caking |

(fortgesetzt)

| Materialtemperatur (zur Simulation einer gewünschten Bauraum/Material-temperatur) [°C] | Parameter / Eigenschaft | FS 3300 PA | Desmomelt® VPKA8702 (*) | Dispercoll® UXP2682 (*) |
|---|---|---|---|---|
| 10 | Dicke [mm] | 0,18±0,01 | 0,61±0,01 | 0,59±0,01 |
| | Gewicht [g] | 0,010±0,001 | 0,067±0,001 | 0,074±0,001 |
| | Porosität | poröse Schicht | geschlossene Schicht | geschlossene Schicht |
| | Warping | kein warping | kein warping | warping |
| | Caking | kein caking | kein caking | caking |
| -28 | Dicke [mm] | Partikel blieben unversintert | 0,42±0,01 | 0,59±0,01 |
| | Gewicht [g] | | 0,043±0,001 | 0,048±0,001 |
| | Porosität | | geschlossene Schicht | geschlossene Schicht |
| | Warping | | kein warping | wenig warping |
| | Caking | | kein caking | wenig caking |
| -78 | Dicke [mm] | Partikel blieben unversintert | 0,39±0,01 | 0,38±0,01 |
| | Gewicht [g] | | 0,033±0,001 | 0,039±0,001 |
| | Porosität | | geschlossene Schicht | geschlossene Schicht |
| | Warping | | kein warping | wenig warping |
| | Caking | | kein caking | kein caking |

Für die niedrigste Temperatur von -78 °C wurde ein Versuch mit Partikeln des Vergleichsmaterials FS 3300 PA und ein Versuch mit Partikeln aus dem erfindungsgemäß geeigneten Material Desmomelt® VPKA8702 bei doppeltem Energieeintrag durchgeführt. Die Ergebnisse sind in Tabelle 2 aufgeführt. Wie zu erkennen ist, konnte hier zwar für das nicht-erfindungsgemäße Material FS 3300 PA eine partielle Versinterung erreicht werden, aber selbst mit dieser hohen Laserleistung wurde keine geschlossene Schicht erhalten. Eine weitere Erhöhung der Laserleistung würde zum teilweisen Verbrennen des Materials führen. Im Gegensatz dazu weist die mit Partikeln aus Desmomelt® VPKA8702 hergestellte Schicht eine geschlossene Struktur auf, die weder Warping- noch Caking-Effekte zeigt.

Tabelle 2: Vergleich der Testkörper von erfindungsgemäß geeigneten Materialien (mit * gekennzeichnet) und nicht-erfindungsgemäßen Materialien bei verdoppeltem Energieeintrag

| Material-temperatur / entspricht einer gewünschten Bauraum-temperatur [°C] | | FS 3300 PA | Desmomelt® VPKA8702 (*) |
|---|---|---|---|
| -78 | Dicke [mm] | 0,32±0,01 | 0,48±0,01 |
| | Gewicht [g] | 0,019±0,001 | 0,048±0,001 |
| | Porosität | poröse Schicht | geschlossene Schicht |
| | Warping | kein warping | kein warping |
| | Caking | kein caking | kein caking |

**Patentansprüche**

1. Verfahren zur Herstellung eines Gegenstandes, umfassend die Schritte:

- Auftragen einer Schicht aus Partikeln auf eine Zielfläche;
- Einwirken von Energie auf einen ausgewählten Teil der Schicht, entsprechend einem Querschnitt des Gegenstandes, in einer Kammer, so dass die Partikel im ausgewählten Teil verbunden werden;
- Wiederholen der Schritte des Auftragens und des Einwirkens von Energie für eine Mehrzahl von Schichten, so dass die verbunden Teile der benachbarten Schichten sich verbinden, um den Gegenstand zu bilden;

wobei wenigstens ein Teil der Partikel ein schmelzbares Polymer aufweist; wobei das schmelzbare Polymer ein Polyurethan ist, das erhältlich ist aus der Reaktion einer Polyisocyanatkomponente und einer Polyolkomponente, wobei die Polyolkomponente ein Polyesterpolyol umfasst, **dadurch gekennzeichnet, dass** das Polyesterpolyol einen Stockpunkt (ASTM D5985) von $\geq$ 25 °C aufweist, das schmelzbare Polymer einen Schmelzbereich (DSC, differential scanning calorimetry; 2. Aufheizung mit Aufheizrate 5 K/min.) von $\geq$ 20 °C bis $\leq$ 100 °C aufweist, das schmelzbare Polymer einen Betrag der komplexen Viskosität $|\eta^*|$ (bestimmt durch Viskosimetriemessung in der Schmelze mit einem Platte/Platte-Oszillationsviskosimeter gemäß ISO 6721-10 bei 100 °C und einer Scherrate von 1/s) von $\geq$ 10 Pas bis $\leq$ 1000000 Pas aufweist und dass die Temperatur innerhalb der Kammer $\leq$ 50 °C beträgt.

2. Verfahren gemäß Anspruch 1, wobei das Einwirken von Energie auf einen ausgewählten Teil der Schicht, entsprechend einem Querschnitt des Gegenstandes, so dass die Partikel im ausgewählten Teil verbunden werden, den folgenden Schritt umfasst:

   - Bestrahlen eines ausgewählten Teils der Schicht, entsprechend einem Querschnitt des Gegenstandes, mit einem Energiestrahl in der Kammer, so dass die Partikel im ausgewählten Teil verbunden werden.

3. Verfahren gemäß Anspruch 1, wobei das Einwirken von Energie auf einen ausgewählten Teil der Schicht, entsprechend einem Querschnitt des Gegenstandes, so dass die Partikel im ausgewählten Teil verbunden werden, die folgenden Schritte umfasst:

   - Auftragen einer Flüssigkeit auf einen ausgewählten Teil der Schicht, entsprechend einem Querschnitt des Gegenstandes, wobei die Flüssigkeit die Absorption von Energie in den von ihr kontaktierten Bereichen der Schicht relativ zu den nicht von ihr kontaktierten Bereichen erhöht;
   - Bestrahlen der Schicht in der Kammer, so dass die Partikel in von der Flüssigkeit kontaktierten Bereichen der Schicht miteinander verbunden werden und die Partikel in nicht von der Flüssigkeit kontaktierten Bereichen der Schicht nicht miteinander verbunden werden.

4. Verfahren gemäß einem der vorhergehenden Ansprüche, wobei das Innere der Kammer zumindest zeitweise gekühlt wird oder wobei das Innere der Kammer zumindest zeitweise nicht beheizt wird.

5. Verfahren gemäß einem der vorhergehenden Ansprüche, wobei das schmelzbare Polymer eine Shore-Härte (DIN ISO 7619-1) von $\geq$ 40 Shore A bis $\leq$ 80 Shore D aufweist.

6. Verfahren gemäß einem der vorhergehenden Ansprüche, wobei das schmelzbare Polymer nach Erwärmen auf 100 °C und Abkühlen auf 20 °C bei einer Abkühlrate von 4 °C/min in einem Temperaturintervall von 25 °C bis 40 °C für $\geq$ 1 Minute ein Speichermodul G' (bestimmt bei der jeweils herrschenden Temperatur mit einem Platte/Platte-Oszillationsviskosimeter gemäß ISO 6721-10 bei einer Scherrate von 1/s) von $\geq$ 100 kPa bis $\leq$ 1 MPa aufweist und nach Abkühlen auf 20 °C und Lagerung für 120 Minuten bei 20 °C ein Speichermodul G' (bestimmt bei 20 °C mit einem Platte/Platte-Oszillationsviskosimeter gemäß ISO 6721-10 bei einer Scherrate von 1/s) von $\geq$ 10 MPa aufweist.

7. Verfahren gemäß einem der vorhergehenden Ansprüche, wobei wenigstens ein Teil der Partikel das schmelzbare Polymer sowie ein weiteres Polymer und/oder anorganische Partikel aufweist.

8. Verfahren gemäß einem der vorhergehenden Ansprüche, wobei der gebildete Gegenstand einer Nachbehandlung unterzogen wird, die ausgewählt ist aus der Gruppe bestehend aus: mechanisches Glätten der Oberfläche, gezieltes lokales Erwärmen, Erwärmen des gesamten Gegenstands, gezieltes lokales Abkühlen, Abkühlen des gesamten Gegenstands, Kontaktieren des Gegenstands mit Wasserdampf, Kontaktieren des Gegenstands mit dem Dampf eines organischen Lösungsmittels, Bestrahlen des Gegenstands mit elektromagnetischer Strahlung, Immersion des Gegenstands in ein Flüssigkeitsbad oder einer Kombination aus mindestens zwei hiervon.

9. Verfahren gemäß einem der vorhergehenden Ansprüche, wobei die Partikel nach dem Schritt des Auftragens einer Schicht der Partikel auf die Zielfläche wenigstens teilweise in einer flüssigen Phase suspendiert sind.

**EP 3 509 822 B1**

10. Verfahren gemäß einem der vorhergehenden Ansprüche, wobei der Gegenstand auf einem Substrat gebildet wird und nach Abschluss des Verfahrens mit dem Substrat verbunden bleibt.

**Claims**

1.  Method of producing an article, comprising the steps of:

    - applying a layer of particles to a target surface;
    - introducing energy into a selected portion of the layer corresponding to a cross section of the article in a chamber such that the particles in the selected portion are bonded;
    - repeating the steps of applying and introducing energy for a multitude of layers, such that the bonded portions of the adjacent layers become bonded in order to form the article;

    where at least some of the particles include a fusible polymer;
    where the fusible polymer is a polyurethane obtainable from the reaction of a polyisocyanate component and a polyol component, said polyol component comprising a polyesterpolyol, **characterized in that** the polyesterpolyol has a no-flow point (ASTM D5985) of ≥ 25°C,
    the fusible polymer has a melting range (DSC, differential scanning calorimetry, 2nd heating operation at heating rate 5 K/min.) of ≥ 20°C to ≤ 100°C,
    the fusible polymer has a magnitude of the complex viscosity |$\eta^*$| (determined by viscometry measurement in the melt with a plate/plate oscillation viscometer according to ISO 6721-10 at 100°C and a shear rate of 1/s) of ≥ 10 Pas to ≤ 1 000 000 Pas
    and **in that** the temperature within the chamber is ≤ 50°C.

2.  Method according to Claim 1, wherein the introducing of energy into a selected portion of the layer corresponding to a cross section of the article such that the particles in the selected portion are bonded comprises the following step:

    - irradiating a selected portion of the layer corresponding to a cross section of the article with a beam of energy in the chamber such that the particles in the selected portion are bonded.

3.  Method according to Claim 1, wherein the introducing of energy into a selected portion of the layer corresponding to a cross section of the article such that the particles in the selected portion are bonded comprises the following steps:

    - applying a liquid to a selected portion of the layer corresponding to a cross section of the article, where the liquid increases the absorption of energy in the regions of the layer with which it comes into contact relative to the regions with which it does not come into contact;
    - irradiating the layer in the chamber such that the particles in regions of the layer that come into contact with the liquid are bonded to one another and the particles in regions of the layer that do not come into contact with the liquid are not bonded to one another.

4.  Method according to any of the preceding claims, wherein the interior of the chamber is cooled at least at times or wherein the interior of the chamber is not heated at least at times.

5.  Method according to any of the preceding claims, wherein the fusible polymer has a Shore hardness (DIN ISO 7619-1) of ≥ 40 Shore A to ≤ 80 Shore D.

6.  Method according to any of the preceding claims, wherein the fusible polymer, after heating to 100°C and cooling to 20°C at a cooling rate of 4°C/min, within a temperature interval from 25°C to 40°C for ≥ 1 minute, has a storage modulus G' (determined at the respective prevailing temperature with a plate/plate oscillation viscometer according to ISO 6721-10 at a shear rate of 1/s) of ≥ 100 kPa to ≤ 1 MPa and, after cooling to 20°C and storage at 20°C for 120 minutes, has a storage modulus G' (determined at 20°C with a plate/plate oscillation viscometer according to ISO 6721-10 at a shear rate of 1/s) of ≥ 10 MPa.

7.  Method according to any of the preceding claims, wherein at least some of the particles include the fusible polymer and a further polymer and/or inorganic particles.

8.  Method according to any of the preceding claims, wherein the article formed is subjected to an aftertreatment selected from the group consisting of:
mechanical smoothing of the surface, controlled local heating, heating of the entire article, controlled local cooling, cooling of the entire article, contacting of the article with steam, contacting of the article with the vapor of an organic solvent, irradiating the article with electromagnetic radiation, immersing the article into a liquid bath, or a combination of at least two of these.

9. Method according to any of the preceding claims, wherein the particles, after the step of applying a layer of particles to the target surface, are at least partly suspended in a liquid phase.

10. Method according to any of the preceding claims, wherein the article is formed on a substrate and, on conclusion of the method, remains bonded to the substrate.

**Revendications**

1. Procédé de fabrication d'un objet, comprenant les étapes :

   - application d'une couche de particules sur une surface cible ;
   - action d'énergie sur une partie sélectionnée de la couche, correspondant à une section transversale de l'objet, dans une chambre de telle sorte que les particules s'assemblent dans la partie sélectionnée ;
   - répétition des étapes d'application et d'action d'énergie pour une majorité de couches, de façon que les parties assemblées des couches voisines s'assemblent dans le but de former l'objet,

   au moins une partie des particules comportant un polymère fusible ;
   le polymère fusible étant un polyuréthane, qui peut être obtenu par la réaction d'un composant polyisocyanate et d'un composant polyol, le composant polyol comprenant un polyesterpolyol, **caractérisé en ce que** le polyesterpolyol présente un point d'écoulement (ASTM D5985) ≥ 25 °C, le polymère fusible présente une plage de fusion (ACD, analyse calorimétrique différentielle ; 2$^{ème}$ chauffage avec une vitesse de montée en température de 5 K/min) de ≥ 20 °C à ≤ 100 °C,
   le polymère fusible présentant une valeur de la viscosité complexe |$\eta$*| (déterminée par mesure viscosimétrique à l'état fondu à l'aide d'un viscosimètre à oscillations à plateaux parallèles selon ISO 6721-10 à 100 °C et pour une vitesse de cisaillement de 1/s) de ≥ 10 Pa.s à ≤ 1 000 000 Pa.s, et
   **en ce que** la température à l'intérieur de la chambre est ≤ 50 °C.

2. Procédé selon la revendication 1, dans lequel l'action d'énergie sur une partie sélectionnée de la couche, correspondant à une section transversale de l'objet, de façon que les particules s'assemblent dans la partie sélectionnée, comprend l'étape suivante :

   - irradiation d'une partie sélectionnée de la couche, correspondant à une section transversale de l'objet, avec un faisceau d'énergie dans la chambre, de façon que les particules s'assemblent dans la partie sélectionnée.

3. Procédé selon la revendication 1, dans lequel l'action d'énergie sur une partie sélectionnée de la couche, correspondant à une section transversale de l'objet, de façon que les particules s'assemblent dans la partie sélectionnée, comprend l'étape suivante :

   - application d'un liquide sur une partie sélectionnée de la couche, correspondant à une section transversale de l'objet, le liquide augmentant l'absorption d'énergie dans les zones de la couche en contact avec le liquide, par rapport aux zones qui ne sont pas en contact avec le liquide ;
   - irradiation de la couche dans la chambre, de façon que les particules s'assemblent les unes aux autres dans les zones de la couche en contact avec le liquide, et que les particules se trouvant dans les zones de la couche qui ne sont pas en contact avec le liquide ne s'assemblent pas les unes aux autres.

4. Procédé selon l'une des revendications précédentes, dans lequel l'intérieur de la chambre est au moins partiellement refroidi, ou dans lequel l'intérieur de la chambre ne subit au moins partiellement aucun chauffage.

5. Procédé selon l'une des revendications précédentes, dans lequel le polymère fusible présente une dureté Shore (DIN ISO 7619-1) de ≥ 40 Shore A à ≤ 80 Shore D.

**6.** Procédé selon l'une des revendications précédentes, dans lequel le polymère fondu présente, après chauffage à 100 °C et refroidissement à 20 °C à une vitesse de refroidissement de 4 °C/min dans un intervalle de température de 25 °C à 40 °C pendant ≥ 1 minute un module de conservation G' (déterminé à la température régnant dans chaque cas à l'aide d'un viscosimètre à oscillations à plateaux parallèles selon ISO 6721-10 et pour une vitesse de cisaillement de 1/s) de ≥ 100 kPa à ≤ 1 MPa et présente, après refroidissement à 20 °C et stockage pendant 120 minutes à 20 °C, un module de conservation G' (déterminé à 20 °C avec un viscosimètre à oscillations à plateaux parallèles selon ISO 6721-10 et pour une vitesse de cisaillement de 1/s) ≥ 10 MPa.

**7.** Procédé selon l'une des revendications précédentes, dans lequel au moins une partie des particules comprend le polymère fusible, ainsi qu'un autre polymère et/ou des particules inorganiques.

**8.** Procédé selon l'une des revendications précédentes, dans lequel l'objet formé est soumis à un posttraitement, qui est choisi dans le groupe consistant en un lissage mécanique de la surface, un chauffage local ciblé, un chauffage de la totalité de l'objet, un refroidissement local ciblé, un refroidissement de la totalité de l'objet, une mise en contact de l'objet avec de la vapeur d'eau, une mise en contact de l'objet avec la vapeur d'un solvant organique, une irradiation de l'objet avec un rayonnement électromagnétique, une immersion de l'objet dans un bain de liquide ou une combinaison d'au moins deux de ceux-ci.

**9.** Procédé selon l'une des revendications précédentes, dans lequel les particules, après l'étape d'application d'une couche des particules sur la surface cible, sont au moins partiellement en suspension dans une phase liquide.

**10.** Procédé selon l'une des revendications précédentes, l'objet étant formé sur un substrat et, après la fin de l'opération, restant assemblé au substrat.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1648686 A
- WO 03106146 A1
- WO 2015197515 A1
- US 20050080191 A1
- WO 2015109143 A1
- WO 2016108154 A1
- EP 0192946 A1

**In der Beschreibung aufgeführte Nicht-Patentliteratur**

- *European Polymer Journal,* 2012, vol. 48, 1611-1621